(19) Europäisches Patentamt
European Patent Office
Office européen des brevets

(11) EP 4 748 871 A1

(12) EUROPEAN PATENT APPLICATION

(43) Date of publication:
**27.05.2026 Bulletin 2026/22**

(21) Application number: **25216854.7**

(22) Date of filing: **19.11.2025**

(51) International Patent Classification (IPC):
***C08G 59/66*** *(2006.01)* ***C08L 63/00*** *(2006.01)*

(52) Cooperative Patent Classification (CPC):
**C08L 63/00; C08G 59/66;** C08G 59/72; C09J 163/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.11.2024 JP 2024202839**

(71) Applicant: **Konica Minolta, Inc.**
**Tokyo 100-7015 (JP)**

(72) Inventors:
- **TAKEUCHI, Aeri**
  **Tokyo, 100-7015 (JP)**
- **OJIMA, Yoshikazu**
  **Tokyo, 100-7015 (JP)**
- **YAGI, Hikaru**
  **Tokyo, 100-7015 (JP)**

(74) Representative: **Hoffmann Eitle**
**Patent- und Rechtsanwälte PartmbB**
**Arabellastraße 30**
**81925 München (DE)**

(54) **EPOXY RESIN COMPOSITION, CURED PRODUCT, AND JOINED BODY**

(57) An epoxy resin composition including an epoxy resin, a polythiol, a photobase generator, and a sensitizer. The epoxy resin composition includes one or more kinds of the epoxy resin, at least one kind of the epoxy resin has two or more epoxy groups in one molecule, and the polythiol contains an ester bond and has five or more mercapto groups, or the polythiol contains a nitrogen atom and a mercapto group is bonded to the nitrogen atom via an alkylene group.

EP 4 748 871 A1

## Description

BACKGROUND OF THE INVENTION

TECHNICAL FIELD

The present disclosure relates to an epoxy resin composition, a cured product, and a joined body.

DESCRIPTION OF RELATED ART

Usually, an electronic device typified by an inkjet head is formed by bonding a plurality of members constituting the electronic device with an adhesive. An adhesive used in an inkjet head is required to have excellent ink resistance, adhesion, and the like. Therefore, an epoxy resin composition is used as the adhesive. The epoxy resin composition contains an epoxy resin, a curing agent, and the like, and is cured through a polymerization reaction by heat or light.

When members of an inkjet head are bonded to each other using an epoxy resin composition as an adhesive, there is a method in which the members are temporarily fixed in a first stage and are full curing in a second stage in order to suppress positional deviation. The temporary fixing in the first stage may be performed by curing the adhesive with light and heat. Furthermore, the full curing of the second stage may be performed by further curing the adhesive with heat. Epoxy resin compositions containing epoxy resins, photobase generators, and specific polythiols have been proposed as an adhesive for bonding members together in two steps (see, for example, Japanese Unexamined Patent Publication No. 2021-113263).

SUMMARY OF THE INVENTION

In addition, when the members of the inkjet head are bonded to each other, it is necessary to prevent occurrence of "misregistration" in which the members are shifted from each other. Furthermore, when members are bonded to each other, it is necessary to prevent the members from being deteriorated by heat at the time of curing.

The epoxy resin composition described in the above-mentioned Japanese Unexamined Patent Publication No. 2021-113263 is intended to obtain effects such as enabling the first stage temporary fixing to be performed quickly, but further improvement is required in terms of suppressing misregistration and deterioration of the member.

The present disclosure has been made in consideration of the above-mentioned problems and situations. The problem to be solved by the present disclosure is to provide an epoxy resin composition which, when used as an adhesive for bonding members of an inkjet head to each other, can suppress misregistration between the members and suppress thermal degradation of the members.

In order to solve the above-mentioned problems, the present disclosure have conducted intensive studies focusing on the structures of an epoxy resin and a curing agent. As a result, the present inventors have found that by using an epoxy resin having two or more functional groups and using polythiol having a specific structure as a curing agent, it is possible to suppress the misregistration of the member and the deterioration of the member, and have completed the present disclosure. That is, the above problem according to the present disclosure is solved by the following means.

To achieve at least one of the abovementioned objects, according to an aspect of the present invention, epoxy resin composition reflecting one aspect of the present invention comprises an epoxy resin, a polythiol, a photobase generator, and a sensitizer, wherein

the epoxy resin composition comprises one or more kinds of the epoxy resin,
at least one kind of the epoxy resin has two or more epoxy groups in one molecule, and
the polythiol contains an ester bond and has five or more mercapto groups, or the polythiol contains a nitrogen atom and a mercapto group is bonded to the nitrogen atom via an alkylene group.

BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, wherein:

Fig. 1 is a schematic diagram schematically illustrating an embodiment of the joined body of the present disclosure; and
Fig. 2 is a schematic diagram illustrating another embodiment of joined body of the present disclosure.

DETAILED DESCRIPTION

Hereinafter, one or more embodiments of the present invention will be described with reference to the drawings. However, the scope of the invention is not limited to the disclosed embodiments.

One embodiment of the epoxy resin composition of the present disclosure is an epoxy resin composition comprising an epoxy resin, a polythiol, a photobase generator, and a sensitizer. The epoxy resin composition of the present embodiment contains one or more kinds of the above-described epoxy resins, and at least one kind of the epoxy resins has two or more epoxy groups in one molecule. In the epoxy resin composition of the present embodiment, the polythiol is the following first polythiol or the following second polythiol. The first polythiol is a polythiol including an ester bond and having five or more mercapto groups. The second polythiol is a polythiol which contains a nitrogen atom and in which a mercapto group is bonded to the nitrogen atom via an alkylene group. In the present specification, the term "the first polythiol or the second polythiol" means the first polythiol, the second polythiol, or "both of the first polythiol and the second polythiol". In the case of "both of the first polythiol and the second polythiol", the ratio of the two is not particularly limited. In addition, in the epoxy resin composition of the present embodiment, the alkylene group is linear, and is a group having a structure in which one hydrogen atom is detached from each of carbon atoms positioned at both ends of a linear alkane and bonded to another atom. A mercapto group is bonded to one of carbon atoms at both ends of the linear alkylene group, and a nitrogen atom is bonded to the other carbon atom. The above-described features are technical features common to or corresponding to the following embodiments.

The polythiol in which a mercapto group is bonded to a nitrogen atom via an alkylene group preferably has a glycoluril skeleton. In the epoxy resin composition of the present embodiment, since the polythiol has a glycoluril skeleton, the reaction rate at the time of curing is increased, and thus the misregistration of the member can be suppressed. In addition, as described above, when the reaction rate at the time of curing is increased, it is possible to decrease the curing temperature, and it is possible to suppress thermal deterioration of the member.

At least one kind of the epoxy resin preferably has three or more epoxy groups in its molecule. By having three or more epoxy groups in the molecule, when the epoxy resin composition is cured by polymerization, the number of reaction sites increases, so that the crosslinking density increases and the ink resistance improves. In the present specification, polymerizing and curing an epoxy resin composition with light is also referred to as a curing reaction.

The epoxy resin is preferably a glycidyl amine-based epoxy resin. When the epoxy resin is a glycidyl amine-based epoxy resin, the reaction rate in the curing reaction can be increased, and furthermore, the ink resistance can be improved by increasing the crosslinking density.

It is preferable that the epoxy resin composition of the present embodiment contains one or more kinds of the above-described photobase generators and at least one kind of the photobase generators contains a borate salt. When at least one kind of the photobase generators has a borate salt, the reaction can be advanced by UV curing.

The content of the photobase generator is preferably in a ratio of 3 to 10 equivalents relative to 100 equivalents of the epoxy resin. That is, the content of the photobase generator is preferably in a ratio of 3/100 to 10/100 gram equivalents relative to 1 gram equivalent of the epoxy resin.

The epoxy resin composition according to the present embodiment includes one or more kinds of the sensitizers. It is preferable that least one kind of the sensitizers is 2-isopropylthioxanthone or 2-ethylanthraquinone. Thus, the photobase generator exhibits sensitivity in a long-wavelength region (in the vicinity of the 365 nm) and can accelerate the reaction.

The epoxy resin composition according to the present embodiment preferably contains a silane coupling agent. Thus, the adhesion can be improved.

The silane coupling agent is preferably an isocyanate, or a compound having an amine group or an epoxy group. Thereby, the adhesion can be improved, and the pot life can be improved.

One embodiment of the cured product of the present disclosure is a reaction product of the epoxy resin composition. Since the cured product of the present embodiment is a reaction product of the epoxy resin composition of the present embodiment, it is a cured product in which deterioration at the time of reaction is suppressed and the degree of deterioration is low. In addition, the cured product of the present embodiment is prevented from being deteriorated by a solvent or the like.

The cured product according to the present embodiment preferably has a nitrogen content of 7.5 to 11% by mass. The cured product according to the present embodiment preferably has a sulfur content of 10 to 17% by mass. The cured product of the present embodiment has a nitrogen content of 7.5 to 11% by mass. Since the cured product of the present embodiment has a sulfur content of 10 to 17% by mass, it is found that the polythiol content in the epoxy resin composition before curing is a preferred content in the epoxy resin composition of the present embodiment.

An embodiment of the joined body of the present disclosure includes the cured product of the present embodiment. Since the joined body of the present embodiment includes the cured product of the present embodiment, the members constituting the joined body are prevented from being misregistered. In addition, since the cured product of the present embodiment is a cured product having a low degree of deterioration, the joined body of the present

embodiment is also a cured product in which deterioration is suppressed and the degree of deterioration is low.

Hereinafter, the present disclosure, constituent elements thereof, and modes and aspects for carrying out the present disclosure will be described in detail. In the present specification, "to" representing a numerical range is used to mean that numerical values described before and after "to" are included as a lower limit value and an upper limit value.

1 Epoxy resin composition

< Epoxy resin >

The epoxy resin composition of the present embodiment includes one or more kinds epoxy resins. The epoxy resin may be one kind or a plurality of kinds. At least one kind of the epoxy resin has two or more epoxy groups in one molecule. Examples of the epoxy resin having two epoxy groups in one molecule include a bisphenol F type epoxy resin and a bisphenol A type epoxy resin.

It is preferred that at least one kind of the epoxy resins have three or more epoxy groups in the molecule. Examples of the epoxy resin having three epoxy groups in one molecule include triglycidyl-p-aminophenol, triglycidyl isocyanurate, triglycidyl urazole, triglycidyl aminocresol, and glycerol triglycidyl ether. Examples of the epoxy resins having four epoxy groups in one molecule include tetraglycidyl diaminodiphenylmethane and tetraglycidyl 1,3-diaminomethylcyclohexane. In addition, as the epoxy resin having three or more epoxy groups in the molecule, a phenol novolac-type epoxy resin, a cresol novolac-type epoxy resin, and the like can be exemplified. The epoxy resin is preferably a glycidyl amine-based epoxy resin among the above-mentioned epoxy resins. In particular, triglycidyl-p-aminophenol is a preferable embodiment. Since at least one kind of the epoxy resins has three or more epoxy groups in the molecule as described above, reaction points are increased when the epoxy resin composition is cured by polymerization, and therefore the crosslinking density is increased and the ink resistance is improved.

< Polythiol >

The epoxy resin composition according to the present embodiment includes polythiol as a curing agent. The polythiol is a polythiol comprising an ester bond and five or more mercapto groups, or a polythiol comprising a nitrogen atom, wherein a mercapto group is bonded to the nitrogen atom via an alkylene group. The polythiol containing an ester bond and having five or more mercapto groups may be referred to as the first polythiol as described above. The polythiol containing a nitrogen atom and having a mercapto group bonded to the nitrogen atom via an alkylene group may be referred to as a second polythiol as described above.

In the epoxy resin composition of the present embodiment, the alkylene group is a structural unit represented by the following Formula (1).

[Chemical Formula 1]

$$(1) \quad -\!\left(CH_2\right)_n\!-$$

In Formula (1) above, n is an integer of 2 to 3.

As described above, the epoxy resin composition of the present embodiment contains the first polythiol or the second polythiol. Thus, the epoxy resin composition according to the present embodiment has a very high reaction rate in curing. Accordingly, in a case where the composition is used as an adhesive for bonding members of an inkjet head to each other, misregistration of the members can be suppressed. In addition, since the epoxy resin of the present disclosure has a high reaction rate, it can be cured at a low temperature. Thus, when the composition is used as an adhesive for bonding members of an inkjet head to each other, deterioration of the members can be suppressed.

It is presumed that in a case where the polythiol contains an ester bond and also contains five or more mercapto groups, the number of mercapto groups that are reaction points is appropriately large, and therefore, the reaction rate is increased, thus allowing suppression of misregistration and a low-temperature reaction. Further, when the polythiol contains a nitrogen atom and a mercapto group is bonded to the nitrogen atom via an alkylene group, it is presumed that the special structure of the polythiol contributes to the improvement of the reaction rate.

As the first polythiol, dipentaerythritol hexakis (3-mercaptopropionate) and the like can be mentioned due to a high reaction rate.

Examples of the second polythiol include 1, 3,4,6-tetrakis (2-mercaptopropyl) glycoluril, 1, 3,4,6-tetrakis (2-mercaptoethyl) glycoluril, and the like. Among these, 1, 3,4,6-tetrakis (2-mercaptopropyl) glycoluril or 1, 3,4,6-tetrakis (2-mercaptoethyl) glycoluril is preferable because of a high reaction speed. Furthermore, among these, 1, 3,4,6-tetrakis (2-mercaptoethyl) glycoluril is more preferable because of a faster reaction speed.

Since the epoxy resin composition is cured using the first polythiol or the second polythiol, the curing temperature can be lowered. When the epoxy resin composition of the present embodiment is cured, first, a first curing is performed by light irradiation, and then a second curing is performed by heating to obtain a cured product. The temperature at the time of light irradiation is preferably 20 to 40°C. Then, the subsequent heating is preferably performed at 50 to 100°C. Both of the curing reactions with the first polythiol and the second polythiol have a high reaction rate. Therefore, the epoxy resin can be cured at such a low temperature. As described above, since the epoxy resin composition of the present embodiment can be cured at a low temperature, when the epoxy resin composition is used as an adhesive for bonding members of an inkjet head, deterioration of the members can be suppressed.

The polythiol is preferably contained in an amount of 60 to 100 parts by mass relative to 100 parts by mass of the epoxy resin. The polythiol is more preferably contained in an amount of 60 to 75 parts by mass relative to 100 parts by mass of the epoxy resin. When the content of the polythiol is less than 60 parts by mass, the crosslinking density may decrease, and the solvent resistance may deteriorate.

< Photobase generator >

The epoxy resin composition according to the present embodiment includes a photobase generator. The photobase generator is a compound that generates a base upon irradiation with UV light. In the epoxy resin composition of the present embodiment, the photobase generator is preferably a compound that generates an organic base upon irradiation with UV light suitable for base generation.

The epoxy resin composition of the present embodiment contains one or more kinds of the above-mentioned photobase generators. At least one kind of the photobase generators preferably contains a borate salt. When at least one kind of the photobase generators has a borate salt, the reaction rate during curing can be increased. Examples of the photobase generator include "1,2-dicyclohexyl-4-,-4, 5,5-tetramethylbiguanidium N-butyltriphenylborate" and "(Z)-{[bis (dimethylamino) methylidene] amino} -N-cyclohexyl (cyclohexylamino) methaniminium tetrakis (3-fluorophenyl) borate". Examples of commercially available products include WPBG-300 (trade name, manufactured by FUJIFILM Wako Pure Chemical Industries, Ltd) and WPBG-345 (trade name, manufactured by FUJIFILM Wako Pure Chemical Industries, Ltd).

The photobase generator is preferably contained in the epoxy resin composition in a ratio of 3 to 10 equivalents relative to 100 equivalents of the resin. Furthermore, the photobase generator is more preferably contained in a ratio of 5 to 10 equivalents relative to 100 equivalents of the epoxy resin. Thus, the reaction of the epoxy resin composition is accelerated. Furthermore, the thickening rate after UV irradiation is further improved. When the content of the photobase generator in the epoxy resin is less than 3 equivalents based on 100 equivalents of the resin, the reaction of the epoxy resin composition may become slow. If the content of the photobase generator in the epoxy resin is more than 10 equivalents relative to 100 equivalents of the epoxy resin, the storage stability of the epoxy resin composition may decrease.

<sensitizer> The epoxy resin composition according to the present embodiment includes a sensitizer. The epoxy resin composition of the present embodiment can further promote the generation of a base by containing a sensitizer together with the photobase generator. By including a sensitizer, it is possible to generate a base from the photobase generator by light irradiation for a shorter time. In addition, a base can be generated from the photobase generator by photoirradiation with light having a longer wavelength. The photobase generator usually has a maximum absorption at around 345 nm, but the addition of the sensitizer is advantageous in that the photobase generator exhibits sensitivity in a long-wavelength region (around 365 nm).

The sensitizer is not particularly limited, and examples thereof include 1-chloroanthraquinone, 2-ethylanthraquinone, and 2-isopropylthioxanthone. Among these, 2-ethylanthraquinone and 2-isopropylthioxanthone are preferable, and 2-isopropylthioxanthone is more preferable. The addition of the sensitizer is advantageous in that the photobase generator exhibits sensitivity in a long-wavelength region (near 365 nm).

The sensitizer is preferably contained in an amount of 0.5 to 5 parts by mass relative to 100 parts by mass of the epoxy resin. The sensitizer is more preferably contained in an amount of 1 to 3 parts by mass relative to 100 parts by mass of the epoxy resin.

< Silane coupling agent >

The epoxy resin composition according to the present embodiment preferably contains a silane coupling agent. Since the epoxy resin composition of the present embodiment contains a silane coupling agent, the adhesiveness is improved when the epoxy resin composition is used as an adhesive for bonding members of an inkjet head.

The silane coupling agent is not particularly limited, but is preferably an isocyanate, or a compound having an amine group or an epoxy group. Examples of the compound having an epoxy group include 3-glycidoxypropyltrimethoxysilane, 3-glycidoxypropylmethyldiethoxysilane, and 3-glycidoxypropyltriethoxysilane. Examples of the compound having an amine group include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, and 3-triethoxysilyl-N-(1,3-dimethyl-butylidene) propylamine. As the isocyanate, 3-isocyanatopropyltriethoxysilane and the like can be mentioned. Among these, from the viewpoint of improving adhesiveness, 3-glycidoxypropyltrimethoxysilane is more preferable.

The silane coupling agent is preferably contained in an amount of 0.2 to 10 parts by mass relative to 100 parts by mass of the epoxy resin. The silane coupling agent is more preferably contained in an amount of 0.2 to 2 parts by mass relative to 100 parts by mass of the epoxy resin. When the content of the silane coupling agent in the epoxy resin composition is within such a range, the adhesiveness is improved. When the content of the silane coupling agent exceeds 10 parts by mass, a decrease in adhesive force may occur due to aggregation of the silane coupling agent.

< Other additives >

The epoxy resin composition of the present embodiment may contain a thixotropic agent, a viscosity modifier, and the like in addition to the above-described components.

< METHOD FOR PRODUCING EPOXY RESIN COMPOSITION >

The method for producing the epoxy resin of the present embodiment is not particularly limited, and the epoxy resin can be produced by mixing the respective components contained in the epoxy resin composition of the present embodiment.

2 Cured product

One embodiment of the cured product of the present disclosure is a reaction product of the epoxy resin composition of the present embodiment. The reaction product is a reaction product obtained by curing the epoxy resin composition of the present embodiment by light, and this reaction product is the cured product of the present embodiment.

Since the cured product of the present embodiment is a cured product obtained by subjecting the epoxy resin composition of the present embodiment to a photocuring reaction, it is a cured product formed at a low temperature in a short time. The cured product of the present embodiment preferably has excellent ink resistance and sealing properties when members of an inkjet head are bonded to each other. When the epoxy resin composition of the present embodiment contains an epoxy resin having three or more epoxy groups in one molecule, the composition has particularly excellent ink resistance and sealing properties.

The cured product of the present embodiment preferably has a nitrogen content of 7.5 to 11% by mass and a sulfur content of 10 to 17% by mass.

The contents of nitrogen and sulfur contained in the cured product of the present embodiment can be measured, for example, by the following method. As an apparatus, a fully automatic elemental analyzer vario EL cube manufactured by Elementar can be used. The measurement conditions are preferably a CHNS measurement mode, a combustion temperature of 1150°C, and a reduction temperature of 850°C. It is preferable to use a tin boat, set a burning time to 150 seconds, and use a thermal conductivity detector TCD as the detector.

Note that the method for producing the cured product of the present embodiment will be described in the description of the method for producing the joined body of the present embodiment described below.

3 Joined body

< Joined body >

One embodiment of the joined body of the present disclosure includes the cured product of the present embodiment. The joined body of the present embodiment is preferably formed by joining a plurality of members together with the epoxy resin composition of the present embodiment as an adhesive. Furthermore, the joined body of the present embodiment is preferably an inkjet head, a camera module, or the like formed by bonding as described above. In this case, the inkjet head, the camera module, or the like includes a plurality of members and a cured product which is a reaction product obtained by reacting the epoxy resin composition of the present embodiment. In addition, as the joined body of the present embodiment, an inkjet head is particularly preferable.

The joined body of the present embodiment is formed by joining a plurality of members to each other with the epoxy resin composition of the present embodiment as an adhesive, and therefore, misregistration of the members is suppressed. Furthermore, in the joined body of the present embodiment, deterioration of the members is suppressed for the same reason. In particular, when a plurality of members constituting an inkjet head are bonded using the epoxy resin composition of the present embodiment as an adhesive, the above-described effect is significant. Fig. 1 is a schematic diagram schematically illustrating an embodiment of a joined body of the present disclosure. The joined body of the present embodiment is the inkjet head 1. The inkjet head 1 of the present embodiment includes a substrate 4, a cured product 5 of

an epoxy resin composition positioned on one surface of the substrate 4, and a nozzle plate 2 disposed on a surface of the cured product 5 of the epoxy resin composition opposite to the surface on which the substrate 4 is disposed. Nozzle holes 3 are formed in the nozzle plate 2. In this structure, the base 4 and the nozzle plate 2 are bonded together with the epoxy resin composition according to the present embodiment as an adhesive. Fig. 2 is a schematic diagram schematically illustrating another embodiment of joined body of the present disclosure. The joined body according to the present embodiment is a part 1 of a camera module. The part 1 of the camera module of the present embodiment includes a substrate 8, a cured product 9 of an epoxy resin composition positioned on one surface of the substrate 8, and a PC chip 7 disposed on a surface of the cured product 9 of the epoxy resin composition opposite to the surface on which the substrate 8 is disposed. In this example, a substrate 4 and a PC chip 7 are bonded to each other using the epoxy resin composition of the present embodiment as an adhesive.

In the joined body of the present embodiment, the material of the members is preferably metal, glass, ceramic, resin, or the like.

< METHOD FOR PRODUCING JOINED BODY >

Next, a method for producing the joined body of the present embodiment will be described. Since the joined body of the present embodiment is obtained by bonding a plurality of members to each other using the epoxy resin of the present embodiment as an adhesive, the plurality of members are bonded to each other in a state in which the cured product of the present embodiment is interposed therebetween. Therefore, the method for producing a joined body of the present embodiment is a method for producing a state in which a plurality of members are bonded to each other with the cured product of the present embodiment interposed therebetween, and includes the method for producing a cured product of the present embodiment.

The joined body of the present embodiment is defined as a joined body including two plate members and the cured product of the present embodiment adhering the plate members to each other while being sandwiched between the two plate members. This is a joined body produced by bonding two plate members using the epoxy resin composition of the present embodiment as an adhesive. Hereinafter, a method for producing a joined body having such a structure will be described.

First, the epoxy resin composition of the present embodiment is applied to a surface of one plate member at room temperature. A method of applying the epoxy resin composition is not particularly limited.

Next, the epoxy resin composition applied to the surface of the plate-like member is irradiated with UV light to be temporary curing. The temporary curing is preferably performed at room temperature. In the present specification, room temperature means a temperature in the range of 20 to 30°C. Since it is not necessary to perform the UV irradiation at a high temperature when the joined body of the present embodiment is produced, the deterioration of the member can be suppressed.

Here, the UV light is light including ultraviolet rays, and means light capable of generating a base by irradiating a composition including a photobase generator and a sensitizer. The UV light to be irradiated is preferably one capable of effectively generating a base by the photobase generator and the sensitizer contained in the epoxy resin composition. As the UV light, for example, light having a peak wavelength in a wavelength range of 340 to 380 nm is preferable, and the integrated light quantity is preferably in a range of 100 to 200J/cm$^2$.

Next, one surface of the other plate-like member is placed on the surface of the plate-like member coated with the epoxy resin composition to obtain an assembly having a structure in which the UV-cured epoxy resin composition is sandwiched between the two plate-like members. Thereafter, the assembly is heated to 50 to 100 °C to perform full curing, thereby obtaining a joined body. At this time, since the epoxy resin composition sandwiched between the plate-like members is cured to form a cured product, the cured product is also obtained at the same time as the joined body. Since the reaction of the epoxy resin composition of the present embodiment is fast, the full curing can be performed even by heating at such a low temperature of 50 to 100°C. In addition, since the temperature of the full curing is low, deterioration of the member can be suppressed. In addition, since the reaction of the epoxy resin composition of the present embodiment is fast, misregistration can be suppressed when two plate-like members are bonded.

[Example]

Hereinafter, the present disclosure will be specifically described with reference to example, but the present disclosure is not limited thereto. Note that in the following Examples, operations were performed at room temperature (25°C) unless otherwise specified.

(Examples 1 to 13, Comparative Examples 1 to 3)

(Epoxy Resin Composition) An epoxy resin, a polythiol, a photobase generator, a sensitizer, and a silane coupling

agent were mixed in a formulation shown in Tables 1 and 2 to prepare an epoxy resin composition. The units of the formulations shown in Tables 1 and 2 are parts by mass. In Tables 1 and 2, the column of "name" shows a product name or a compound name.

The mixing of the respective components was carried out by stirring the epoxy resin, the photobase generator and the sensitizer, heating at 110°C for 30 minutes and allowing to cool, and then the polythiol was added. Thereafter, the mixture was stirred for 1 minute with Awatori Rentaro (product name) (model number: AR-250) manufactured by Thinky Corporation.

The components contained in the epoxy resin composition are as follows.

(epoxy resin)

jER828 (trade name): bisphenol A-type epoxy resin, manufactured by Mitsubishi Chemical Corporation, epoxy equivalents; 184 to 194

jER630 (trade name): Polyfunctional (Multifunctional) epoxy resin, manufactured by Mitsubishi Chemical Corporation, epoxy equivalents; 90 to 106

(polythiol)

PE-1 (Karenz MT PE-1; product name): Ester -type polythiol, manufactured by Resonac, compound name; pentaerythritol tetrakis (3-mercaptobutyrate

DPMP (trade name): ester-type polythiol, manufactured by Sakai Chemical Industry Co., Ltd., compound name; 3-mercaptopropionic acid ester of dipentaerythritol

C3TS-G (trade name): glycoluril -type polythiol, manufactured by Shikoku Chemicals Corporation, compound name: 1, 3,4,6-tetrakis (3-mercaptopropyl) glycoluril.

PEPT: pentaerythritol tripropanethiol, manufactured by SC Organic Chemical

(photobase generator)

WPBG-300 (trade name): Compound name: 1,2-dicyclohexyl-4-,-4, 5,5-tetramethylbiguanidium N-butyltriphenylborate, manufactured by Fujifilm Wako Pure Chemical Industries, Ltd.

WPBG-345 (trade name): The compound name is (Z)-{[bis (dimethylamino) methylidene] amino} -N-cyclohexyl (cyclohexylamino) methaniminium tetrakis (3-fluorophenyl) borate, manufactured by Fujifilm Wako Pure Chemical Industries, Ltd.

(sensitizer)

2-isopropylthioxanthone: manufactured by FUJIFILM Wako Pure Chemical Industries, Ltd., compound name; 2-isopropylthioxanthone

2-ethylanthraquinone, manufactured by Tokyo Chemical Industry Co., Ltd., compound name; 2-ethylanthraquinone

(silane coupling agent)

KBM-403 (trade name): Manufactured by Shin -Etsu Chemical Co., Ltd., compound name; 3-glycidoxypropyltrimethoxysilane

The obtained epoxy resin compositions (example 1 to 13 and comparative example 1 to 3) were evaluated as follows. The results are shown in Tables 1 and 2.

(misregistration)

The epoxy resin composition is irradiated with ultraviolet (UV) rays such that the integrated amount of light is 182J/cm $^2$. The epoxy resin composition is gelled by ultraviolet irradiation. Thereafter, it is heated to 100°C. At the time of heating, the viscosity after the start of heating is measured with a rheometer. Then, the viscosity decrease rate is calculated

by the following formula. The viscosity reduction rate is a value obtained by subtracting the minimum viscosity after the start of heating from the initial viscosity, dividing by the initial viscosity, and multiplying by 100.

Viscosity decrease rate = {(initial viscosity-minimum viscosity after start of heating)/initial viscosity} $\times$ 100 [%]

The ultraviolet irradiation is performed at room temperature. The initial viscosity is measured immediately after the start of heating. The viscosity after the start of heating is measured every 1 second after the start of heating.

The evaluation criterion for the rate of viscosity decrease is as follows. A and B are passed, and C and D are failed.

A: less than 5%
B: 5% or more and less than 10%
C: 10% or more and less than 20%
D: 20% or more

(low temperature curability)

The residual calorific value of the obtained epoxy resin composition is measured using a differential scanning calorimeter (DSC). The low-temperature curability is obtained as an unreacted ratio according to the following equation for obtaining an unreacted ratio. The unreacted ratio is a ratio of the amount of unreacted components remaining as unreacted components when the epoxy resin composition is cured at a low temperature to the amount of the epoxy resin composition before curing. The more advanced the low-temperature curing, the more advanced the reaction when allowed to stand at 100°C for 1 hour, and therefore, the residual heat generation amount becomes smaller. Here, the "amount of heat generated in an uncured state" is the amount of heat generated when an uncured epoxy resin composition is cured. The "calorific value of the cured product" is a calorific value generated when the epoxy resin composition is left to stand at 100°C for 1 hour.

Unreacted ratio = (1 - (amount of heat generated from cured product/amount of heat generated when uncured)) $\times$ 100 [%]

The evaluation criterion for the low-temperature curability are as follows. A and B are passed, and C and D are failed.

A: less than 10%
B: 10% or more and less than 15%
C: 15% or more and less than 20%
D: 20% or more

The resultant epoxy resin compositions (example 1 to 13 and comparative example 1 to 3) were irradiated with ultraviolet (UV) rays at 23°C such that the cumulative amount of light reached 182J/cm$^2$. The epoxy resin composition was gelled by ultraviolet irradiation. Thereafter, the mixture was heated to 100°C and cured at 100°C for 1 hour to obtain a cured product. The epoxy resin compositions used for curing were each 0. 2 g. The obtained cured product is a cured product of the present disclosure. The swelling ratio of the obtained cured product was determined by the following method.

(swelling rate)

The mass of each cured product is measured. Then, each cured product is immersed in anisole as a solvent, and left at 60°C for 7 days. After 7 days, each of the swollen cured product is removed from the solvent, and the mass is measured. The swelling ratio is calculated by the following formula for obtaining the swelling ratio.

Swelling ratio = {(mass of cured product after swelling-mass of cured product before swelling)/mass of cured product before swelling} $\times$ 100 [%]

The evaluation criterion for the swelling ratio is as follows. A and B are passed, and C and D are failed.

A: less than 5%
B: 5% or more and less than 10% C: 10% or more and less than 20%

D: 20% or more

Two members were bonded using the obtained epoxy resin composition as an adhesive to produce a joined body. As the members, plate-like glass and film-like polyimide were used. The obtained joined body is a structure in which the plate-like glass and the film-like polyimide are bonded to each other with the cured product, which is a reaction product of the epoxy resin composition, interposed therebetween. The obtained joined body is the joined body of the present disclosure.

[Table 1]

TABLE I

| | | | EXAMPLE | | | | | | | |
|---|---|---|---|---|---|---|---|---|---|---|
| COMPONENTS | STRUCTURE | NAME | 1 | 2 | 3 | 4 | 5 | 6 | 7 | 8 |
| EPOXY RESIN | BISPHENOL A TYPE | jER828 | 100 | - | - | - | - | - | - | 100 |
| | MULTIFUNCTIONAL TYPE | jER630 | - | 100 | 100 | 100 | 100 | 100 | 100 | - |
| POLYTHIOL | ESTER TYPE | PE-1 | - | - | - | - | - | - | - | - |
| | ESTER TYPE | DPMP | 70 | 70 | 70 | 70 | 70 | 70 | 70 | - |
| | GLYCOLURIL TYPE | C3TS-G | - | - | - | - | - | - | - | 70 |
| | ETHER TYPE | PEPT | - | - | - | - | - | - | - | - |
| PHOTOBASE GENERATOR | | WPBG-300 | 5 | 3 | 3 | 5 | 10 | 5 | - | 5 |
| | | WPBG-345 | - | - | - | - | - | - | 5 | - |
| SENSITIZER | | ITX | 1 | 1 | 1 | 1 | 1 | - | 1 | 1 |
| | | 2-ETHYLANTHRAQUINONE | - | - | - | - | - | 1 | - | - |
| SILANE COUPLING AGENT | EPOXY-BASED | KBM-403 | 2 | - | 2 | 2 | 2 | 2 | 2 | 2 |
| CURING TEMPERATURE (°C) | | | 100 | 100 | 100 | 100 | 100 | 100 | 100 | 100 |
| | | | | | | | | | | |
| EVALUATION | EVALUATION ITEM | EVALUATION CONTENT | | | | | | | | |
| | POSITIONAL DEVIATION | VISCOSITY DECREASE AFTER GELATION | B | B | B | A | A | B | B | B |
| | INK RESISTANCE | SWELLING RESISTANCE | B | A | A | A | A | A | A | B |
| | LOW-TEMPERATURE CURABLITY | LOW TEMPERATURE UNREACTED COMPONENT AMOUNT | A | A | A | A | A | A | A | A |

[Table 2]

TABLE II

| | | | EXAMPLE | | | | | COMPARATIVE EXAMPLE | | |
|---|---|---|---|---|---|---|---|---|---|---|
| COMPONENTS | STRUCTURE | NAME | 9 | 10 | 11 | 12 | 13 | 1 | 2 | 3 |
| EPOXY RESIN | BISPHENOL A TYPE | jER828 | - | - | - | - | - | 100 | - | 100 |
| | MULTIFUNCTIONAL TYPE | jER630 | 100 | 100 | 100 | 100 | 100 | - | 100 | - |
| POLYTHIOL | ESTER TYPE | PE-1 | - | - | - | - | - | - | - | 70 |
| | ESTER TYPE | DPMP | - | - | - | - | - | - | - | - |
| | GLYCOLURIL TYPE | C3TS-G | 70 | 70 | 70 | 70 | 70 | - | - | - |
| | ETHER TYPE | PEPT | - | - | - | - | - | 70 | 70 | - |
| PHOTOBASE GENERATOR | | WPBG-300 | 3 | 5 | 10 | 5 | - | 5 | 5 | 5 |
| | | WPBG-345 | - | - | - | - | 5 | - | - | - |
| SENSITIZER | | ITX | 1 | 1 | 1 | - | 1 | 1 | 1 | 1 |
| | | 2-ETHYLANTHRAQUINONE | - | - | - | 1 | - | - | - | - |
| SILANE COUPLING AGENT | EPOXY-BASED | KBM-403 | 2 | 2 | 2 | 2 | 2 | 2 | 2 | 2 |
| CURING TEMPERATURE (°C) | | | 100 | 100 | 100 | 100 | 100 | 100 | 100 | 100 |
| | | | | | | | | | | |
| EVALUATION | EVALUATION ITEM | EVALUATION CONTENT | | | | | | | | |
| | POSITIONAL DEVIATION | VISCOSITY DECREASE AFTER GELATION | B | A | A | B | B | C | C | B |
| | INK RESISTANCE | SWELLING RESISTANCE | A | A | A | A | A | C | B | D |
| | LOW-TEMPERATURE CURABLITY | LOW TEMPERATURE UNREACTED COMPONENT AMOUNT | A | A | A | A | A | C | C | B |

From the evaluation results of examples 3 and 4 and the evaluation results of examples 9, 10, and 11, it is found that as the blending amount of the photobase generator increases, the effect of suppressing the misregistration becomes higher.

From the evaluation results of example 8 and comparative example 1, it is found that the evaluation results of the misregistration, the ink resistance, and the low-temperature curability are better in a case where the glycoluril type is blended as the polythiol than in a case where the ether type is blended. This is considered to be because the epoxy resin composition of comparative example 1 is a combination of a bifunctional epoxy resin and an ether-based thiol, so that the reaction temperature is too low at 100°C, and an unreacted component remains.

In the epoxy resin composition of comparative example 2, due to the combination of the trifunctional epoxy resin and the ether-based thiol, the reaction temperature is too low at 100°C, and an unreacted component remains, and thus, it is considered that the evaluation results of the misregistration and the low-temperature curability are deteriorated. In addition, it is considered that the epoxy resin composition of comparative example 3 has a low crosslinking density due to the combination of the bifunctional epoxy resin and the tetrafunctional ester-type thiol, and thus the evaluation result of the ink resistance is deteriorated.

The epoxy resin composition of example 3 was obtained by adding 2 parts by mass of a silane coupling agent to the epoxy resin composition of example 2. The example 3 epoxy resin composition had a stronger adhesive force than the example 2 epoxy resin composition. Thus, it was found that the silane coupling agent further improved the adhesive force. The adhesive force was confirmed by the following method. First, a polyimide film and a glass plate were bonded to each other with an epoxy resin composition to produce a joined body. The adhesive strength of the obtained joined body was confirmed by a 90-degree peeling test (JISK6854-1).

The nitrogen content and the sulfur content of the cured product of the epoxy resin composition of example 10 were measured, and it was found that the nitrogen content was 8.2% by mass and the sulfur content was 11.3% by mass. The contents of nitrogen and sulfur contained in the cured product were measured by the following method. As a measurement apparatus, a fully automatic elemental analyzer vario EL cube manufactured by elementar Corporation was used. The measurement conditions were a CHNS measurement mode, a combustion temperature of 1150°C, and a reduction temperature of 850°C. Then, a tin boat was used, the burning time was 150 seconds, and a thermal conductivity detector TCD was used as a detector.

The present embodiment relates to the epoxy resin composition in which the polythiol includes an ester bond and has five or more mercapto groups, or the polythiol includes a nitrogen atom and the mercapto group is bonded to the nitrogen atom via an alkylene group. Therefore, the epoxy resin composition of the present embodiment has a very high reaction rate in curing. Accordingly, in a case where the composition is used as an adhesive for bonding members of an inkjet head to each other, misregistration of the members can be suppressed. In addition, since the epoxy resin composition of the present embodiment has a high reaction rate, a curing reaction can be performed at a low temperature. Thus, when the epoxy resin composition is used as an adhesive for bonding members of an inkjet head to each other, deterioration of the members due to heat can be suppressed. That is, when the members of the inkjet head are bonded to each other, it is preferable to bond the members to each other by using the adhesive containing the epoxy resin composition of the present embodiment.

The expression mechanism or action mechanism of the effect of the present embodiment is not clear, but it is presumed as follows.

When the polythiol contains an ester bond and has five or more mercapto groups, the number of mercapto groups as reaction sites is moderately large. Therefore, it is presumed that the reaction rate is increased, and misregistration can be suppressed or a low-temperature reaction can be performed.

Further, when the polythiol contains a nitrogen atom and a mercapto group is bonded to the nitrogen atom via an alkylene group, it is presumed that the special structure of the polythiol contributes to the improvement of the reaction rate.

According to the present embodiment, it is possible to provide an epoxy resin composition which, when used as an adhesive for bonding members of an inkjet head to each other, can suppress misregistration between the members and can suppress thermal deterioration of the members.

Although embodiments of the present invention have been described and illustrated in detail, the disclosed embodiments are made for purposes of illustration and example only and not limitation. The scope of the present invention should be interpreted by terms of the appended claims.

## Claims

1. An epoxy resin composition comprising an epoxy resin, a polythiol, a photobase generator, and a sensitizer, wherein

   the epoxy resin composition comprises one or more kinds of the epoxy resin,
   at least one kind of the epoxy resin has two or more epoxy groups in one molecule, and

the polythiol contains an ester bond and has five or more mercapto groups, or the polythiol contains a nitrogen atom and a mercapto group is bonded to the nitrogen atom via an alkylene group.

**2.** The epoxy resin composition according to claim 1, wherein the polythiol in which the mercapto group is bonded to the nitrogen atom via the alkylene group has a glycoluril skeleton.

**3.** The epoxy resin composition according to claim 1 or 2, wherein at least one kind of the epoxy resin has three or more epoxy groups in a molecule thereof.

**4.** The epoxy resin composition according to any one of claims 1 to 3, wherein the epoxy resin is a glycidyl amine-based epoxy resin.

**5.** The epoxy resin composition according to any one of claims 1 to 4, wherein

the epoxy resin composition comprises one or more kinds of the photobase generator, and
at least one kind of the photobase generator comprises a borate salt.

**6.** The epoxy resin composition according to any one of claims 1 to 5, wherein a content of the photobase generator is in a ratio of 3 to 10 equivalents relative to 100 equivalents of the epoxy resin.

**7.** The epoxy resin composition according to any one of claims 1 to 6, wherein

the epoxy resin composition comprises one or more kinds of the sensitizer, and
at least one kind of the sensitizer is 2-isopropylthioxanthone or 2-ethylanthraquinone.

**8.** The epoxy resin composition according to any one of claims 1 to 7, comprising a silane coupling agent.

**9.** The epoxy resin composition according to claim 8, wherein the silane coupling agent is an isocyanate, or a compound having an amine group or an epoxy group.

**10.** A cured product which is a reaction product of the epoxy resin composition according to any one of claims 1 to 9.

**11.** The cured product according to claim 10, wherein the cured product has a nitrogen content of 7.5 to 11% by mass and a sulfur content of 10 to 17% by mass.

**12.** A joined body (1) comprising the cured product according to claim 10 or 11.

FIG. 1

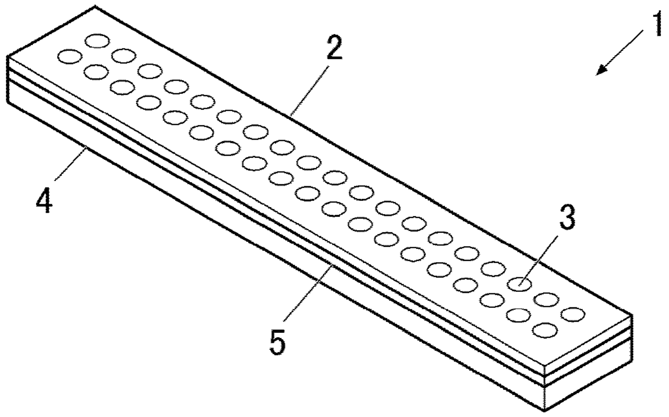


FIG. 2

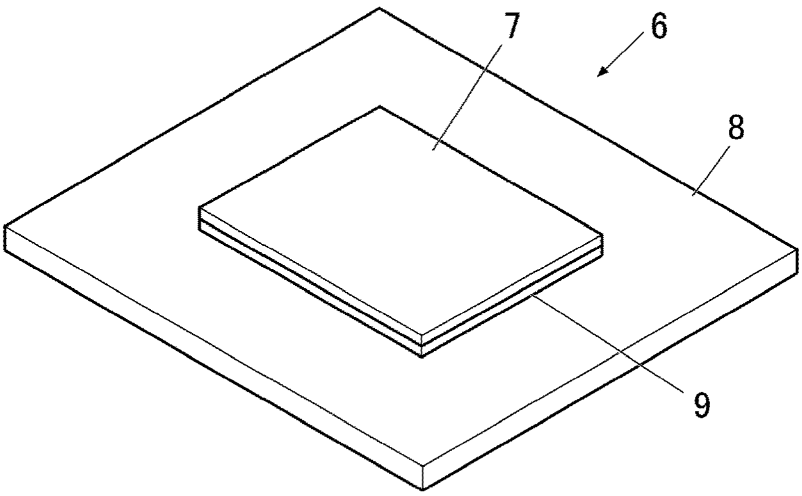

Europäisches Patentamt
European Patent Office
Office européen des brevets

# EUROPEAN SEARCH REPORT

Application Number
EP 25 21 6854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/222000 A1 (YAMAJI HARUKA [JP] ET AL) 22 July 2021 (2021-07-22)<br>* examples 1,4-15,18-28; tables 1-2 *<br>----- | 1-12 | INV.<br>C08G59/66<br>C08L63/00 |
| X | US 2014/329926 A1 (KIRINO MANABU [JP]) 6 November 2014 (2014-11-06)<br>* examples 52-55; table 5 *<br>----- | 1-12 | |
| A | JP 2019 143072 A (PANASONIC IP MAN CORP) 29 August 2019 (2019-08-29)<br>* paragraphs [0039] - [0040]; claim 1; example 1 *<br>----- | 1-12 | |

TECHNICAL FIELDS SEARCHED (IPC)

C08G
C08L

The present search report has been drawn up for all claims

2

| Place of search | Date of completion of the search | Examiner |
|---|---|---|
| The Hague | 24 March 2026 | Goulis, Panagiotis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 21 6854

This annex lists the patent family members relating to the patent documents cited in the above-mentioned European search report. The members are as contained in the European Patent Office EDP file on
The European Patent Office is in no way liable for these particulars which are merely given for the purpose of information.

24-03-2026

| Patent document cited in search report | Publication date | Patent family member(s) | Publication date |
|---|---|---|---|
| US 2021222000 A1 | 22-07-2021 | JP 7508229 B2 | 01-07-2024 |
| | | JP 2021113263 A | 05-08-2021 |
| | | US 2021222000 A1 | 22-07-2021 |
| US 2014329926 A1 | 06-11-2014 | CN 103987754 A | 13-08-2014 |
| | | EP 2792694 A1 | 22-10-2014 |
| | | JP 6036703 B2 | 30-11-2016 |
| | | JP WO2013089100 A1 | 27-04-2015 |
| | | KR 20140113651 A | 24-09-2014 |
| | | US 2014329926 A1 | 06-11-2014 |
| | | WO 2013089100 A1 | 20-06-2013 |
| JP 2019143072 A | 29-08-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021113263 A